# EUROPEAN PATENT SPECIFICATION

(11) **EP 3 684 094 B1**
(45) Date of publication and mention of the grant of the patent: **26.07.2023**
(21) Application number: 18855087.5
(22) Date of filing: 06.09.2018
(51) Int. Cl.: H04W 52/14, H04W 52/28, H04W 52/32, H04W 24/02, H04W 88/06

(54) **POWER PROCESSING METHOD AND DEVICE, AND STORAGE MEDIUM**
LEISTUNGSVERARBEITUNGSVERFAHREN UND -VORRICHTUNG SOWIE SPEICHERMEDIUM
PROCÉDÉ ET DISPOSITIF DE TRAITEMENT DE PUISSANCE ET SUPPORT D'INFORMATIONS

(30) Priority: 06.09.2017 CN 201710794698
(43) Date of publication of application: 22.07.2020
(73) Proprietor: ZTE Corporation, Shenzhen, Guangdong 518057 (CN)
(72) Inventor: ZENG, Zhaohua, Shenzhen Guangdong 518057 (CN); JIA, Wenjuan, Shenzhen Guangdong 518057 (CN)
(74) Representative: Aipex B.V.
(86) International application number: PCT/CN2018/104364
(87) International publication number: WO 2019/047893

(56) References cited:
- EP-A1- 2 852 074
- WO-A1-2014/014394
- WO-A2-2009/058091
- CN-A- 102 111 862
- CN-A- 103 916 901
- CN-A- 105 916 168
- CN-A- 107 484 192
- US-B2- 9 485 737
- ZTE: "Mechanisms for interference avoidance and coordination in small cell scenarios", 3GPP DRAFT; R1-130135_SMALLCELLINTERFERENCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 19 January 2013 (2013-01-19), XP050663562, Retrieved from the Internet: URL:http://www.3gpp.org/ftp/tsg_ran/WG1_RL 1/TSGR1_72/Docs/ [retrieved on 2013-01-19]

## Description

### TECHNICAL FIELD

The present application relates to the communication field and, in particular, to a power processing method, a power processing device, and a storage medium.

### BACKGROUND

Power control is an important function required by a base station and a cell. At present, the mainstream approach is to reduce transmission power on the premise of ensuring communication quality, thus network interference and power consumption are reduced.

In general, the power control is divided into open-loop power control and closed-loop power control.

In the open-loop power control, there is no interaction between a base station and a terminal, mainly an one-way adjustment is performed based on specific information (such as a signal-to-noise ratio of a specific channel and historical network quality data). Generally, power related setting values are calculated based on parameters of a planned radio remote unit (RRU), such as specifications and frequency band. The open-loop power control is mainly used in a downlink signal adjustment.

On the other hand, the closed-loop power control performs a power adjustment through interaction between the base station and the terminal, and is mainly used in an uplink signal adjustment.

Although the open-loop power control does not require signaling interaction, it cannot perform targeted local control when performing overall control by taking a cell as minimum granularity. The closed-loop power control requires a lot of signaling interaction messages, however, it can achieve control on UE granularity.

No matter which control method as mentioned above, it usually requires a lot of signaling interaction between cells to adjust the inter-cell interference, and only a coarse adjustment may be realized. In addition, periodical adjustment is made in the open-loop power control according to specific bases (planning related data and historical related data), and usually there is a relatively large time interval between the adjustments. On the other hand, the closed-loop power control needs interaction with a user equipment (UE) or even a neighbor cell, and the interval between the adjustments is not small either. The above two power control methods also have certain negative influence on a key performance indicator (KPI), such as transmission delay.

The above situation often occurs in a scene of transmitting a cell reference signal.

The reference signal is a basic signal transmitted by a transmitter and a basis for a normal operation of a receiver in a wireless network, which provides functions, such as coverage determination, obtainment of a state of wireless environment (a channel estimation), assistance for the terminal to demodulate a signal, etc..

In order to facilitate the terminal to determine a signal strength, the protocol requires the cell to continuously transmit the reference signal, and transmission power of the reference signal should be kept constant. A constant transmission power is also applied in a system, such as a global system for mobile communication (GSM), wideband code division multiple access (WCDMA), and etc.. Therefore, the constant power is a very important requirement for the cell reference signal.

Under a long-term evolution (LTE) system, the cell reference signal (CRS) is continuously transmitted over entire bandwidth and all subframes of the cell, which it is beneficial for the terminal to use the CRS. However, it will generate a relatively large inter-cell interference: especially in a scene of a light-load cell or unbalanced load between cells. A relatively large interference will be applied to a heavy-load cell if CRS of a light-load cell is transmitted on the entire bandwidth. For neighbor cells with a same frequency, an interference of the CRS will affect demodulation capability of the UE, especially utilization of downlink high-order modulation is limited and further downlink throughput is affected. The interference of the CRS is one of main components of LTE inter-cell interference, which becomes an important factor of affecting a signal to interference plus noise ratio (SINR), thus the user rate and cell throughput are affected, and it will be an important factor of affecting performance of an ultra dense network (UDN) in the future.

In related technologies, for the situation that the cell throughput is affected due to the cell interference caused by transmitting a cell reference signal, no related technical solution has been proposed yet.

Further relevant technologies are also known from US 9485737 B2 (KT CORP [KR]) 1 November 2016 (2016-11-01) which relates to CONTROLLING RADIO UNITS TO TRANSMITTING SIGNAL WITH DIFFERENT TRANSMISSION POWER, and WO 2014/014394 A1 (ERICSSON TELEFON AB L M [SE]; SORRENTINO STEFANO [SE] ET AL.) 23 January 2014 (2014-01-23) which relates to A NETWORK NODE AND A METHOD THEREIN FOR SCHEDULING A DOWNLINK DATA TRANSMISSION TO A UE, AND A UE AND A METHOD THEREIN FOR RECEIVING A DOWNLINK DATA TRANSMISSION.

### SUMMARY

A summary of the present disclosure is presented as follows. The summary is not intended to limit the protection scope of the claims.

Embodiments of the present application provide a power processing method, a power processing device and a storage medium, to avoid the situation in related technologies that the cell throughput is affected due to the cell interference caused by transmitting the cell reference signal. The features of the method and device according to the present invention are defined in the independent claims. Further improvements are provided in the dependent claims.

The following embodiments are provided for illustrative purposes.

An embodiment of the present application provides a power processing method, includes: monitoring resource blocks of a current cell at a predetermined time interval to obtain a monitoring result; reducing transmission power of a cell reference signal to a specified power according to the monitoring result, and transmitting the cell reference signal on a transmission resource. The transmission resource includes at least one of a symbol and a designated resource block. The designated resource block includes at least one of a scheduling resource block, a non-scheduling resource block and N central resource blocks, where N is a positive integer.

Another embodiment of the present application provides a power processing device including a processor and a memory configured to store instructions executable by the processor. The processor is configured to monitor resource blocks of a current cell at a predetermined time interval to obtain a monitoring result; reduce transmission power of a cell reference signal to a specified power according to the monitoring result, and transmit the cell reference signal on a transmission resource. The transmission resource includes at least one of a symbol and a designated resource block. The designated resource block includes at least one of a scheduling resource block, a non-scheduling resource block and N central resource blocks, where N is a positive integer.

Another embodiment of the present application provides a storage medium. The storage medium includes a stored program used for executing the method according to any of the power processing method mentioned above.

Other aspects will become apparent based on reading and understanding of the drawings and detailed description.

### BRIEF DESCRIPTION OF DRAWINGS

The drawings described herein are used to provide an understanding of the present application and form a part of the present application, the illustrative embodiments of the present application and the description thereof are used to explain the present application and do not constitute improper limitation of the application. In the drawings:
FIG. 1 is a hardware block diagram of a base station used for a power processing method according to an embodiment of the present application;
FIG. 2 is a flowchart of a power processing method according to an embodiment of the present application;
FIG. 3 is a schematic diagram (1) of power transmission distribution according to an embodiment of the present application;
FIG. 4 is a schematic diagram (2) of power transmission distribution according to an embodiment of the present application;
FIG. 5 is a schematic diagram (3) of power transmission distribution according to an embodiment of the present application;
FIG. 6 is a schematic diagram (4) of power transmission distribution according to an embodiment of the present application;
FIG. 7 is a schematic diagram (5) of power transmission distribution according to an embodiment of the present application;
FIG. 8 is a schematic diagram (6) of power transmission distribution according to an embodiment of the present application;
FIG. 9 is a block diagram of a power processing device according to an embodiment of the present application;
FIG. 10 is a block diagram of another power processing device according to an embodiment of the present application;
FIG. 11 is a block diagram of another power processing device according to an embodiment of the present application.

### DETAILED DESCRIPTION

The present application will be described hereinafter in detail with reference to the drawings in conjunction with the embodiments.It is to be noted that if not in collision, the embodiments and features therein in the present application may be combined with each other.

It is to be noted that the terms "first", "second" and the like in the description, claims and drawings of the present disclosure are used to distinguish between similar objects and are not necessarily used to describe a particular order or sequence.

### Embodiment I

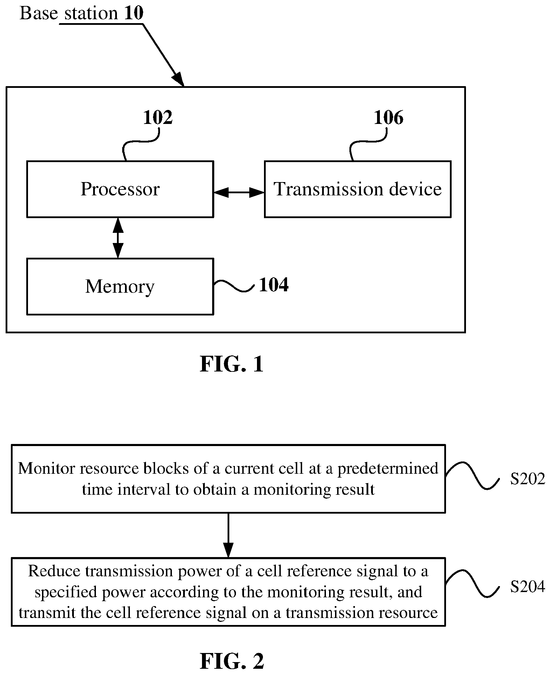

A method provided by embodiment I of the present application may be executed on a base station or a similar computing device. Assuming that the method is executed on a base station, FIG. 1 is a hardware block diagram of a base station used for a power processing method according to an embodiment of the present application. As shown in FIG. 1, the base station 10 includes at least one (only one is shown in FIG. 1) processor 102 (the processor 102 may include, but is not limited to, a processing device such as a microprogrammed control unit (MCU) or a field programmable gate array (FPGA), etc.), a memory 104 configured to store data, and a transmission device 106 with a communication function. One of ordinary skill in the art may understand that the structure shown in FIG. 1 is only schematic and does not limit the structure of the above electronic device. For example, the base station 10 may further include more or fewer components than that shown in FIG. 1, or have a configuration different with that shown in FIG. 1.

The memory 104 is configured to store software programs and modules of an application software, such as program instructions/modules corresponding to the power processing method according to the embodiments of the present application. The processor 102 executes various functional applications and data processing by running the software programs and modules stored in the memory 104, i.e., to realize the above-mentioned method. The memory 104 may include a high-speed random access memory and also a non-volatile memory, such as at least one magnetic storage device, flash memory, or other non-volatile solid-state memory. In some embodiments, the memory 104 may include a memory remotely disposed relative to the processor 102, which may be connected to the base station 10 through a network. Examples of the network include, but are not limited to, the Internet, an intranet, a local area network, a mobile communication network, and combinations thereof.

The transmission device 106 is configured to receive or transmit data via a network. In an embodiment, the transmission device 106 includes a network interface controller (NIC), which may be connected to other network devices through the base station, so as to communicate with the Internet. In an embodiment, the transmission device 106 may be a radio frequency (RF) module, which is configured to wirelessly communicate with the Internet.

In this embodiment, a power processing method operated on the base station is provided. FIG. 2 is a flowchart of a power processing method according to an embodiment of the present application. As shown in FIG. 2, the method includes steps S202 and S204 described below.

In step 202, resource blocks of a current cell are monitored at a predetermined time interval to obtain a monitoring result.

In step 204, transmission power of a cell reference signal is reduced to a specified power according to the monitoring result, and the cell reference signal is transmitted on a transmission resource. The transmission resource includes at least one of a symbol or a designated resource block. The designated resource block includes at least one of a scheduling resource block, a non-scheduling resource block and N central resource blocks, where N is a positive integer. Through the above method, resource blocks of the current cell are monitored at a predetermined time interval, so that the transmission power of the cell reference signal transmitted on the transmission resource is flexibly adjusted (i.e., reducing the transmission power). By reducing the transmission power of the cell reference signal, interference of the cell reference signal to other cells can be avoided, thus interference to other cells is reduced and cell throughput is improved.

In an actual operation process, based on different background configuration results of the base station, the transmission power of the cell reference signal is reduced to the specified power in a time domain, the transmission power of the cell reference signal is reduced to the specified power in a frequency domain, or the transmission power of the cell reference signal is reduced to the specified power in a time-frequency domain. Therefore, step S204 may be implemented in various manners. In the present embodiment, step S204 includes steps described below. Configuration information of the background of the base station is acquired, where the configuration information includes at least one of information indicating time domain power control, information indicating frequency domain power control and information indicating time-frequency domain power control. The transmission power of the cell reference signal is reduced to the specified power according to the monitoring result and the configuration information, and the cell reference signal is transmitted on the transmission resource. That is, in the present embodiment, when the transmission power of the cell reference signal is reduced to the specified power, not only the monitoring result but also the configuration information are needed to be considered.

For the above step S202, two monitoring results may be obtained. For example, a first monitoring result is obtained if it is monitored that a resource block in the resource blocks of the current cell is scheduled during the predetermined time interval; and a second monitoring result is obtained if it is monitored that no resource block in the resource blocks of the current cell is scheduled during the predetermined time interval.

It should be noted that the predetermined time interval in the embodiments of the present application may be a time interval at a transmission time interval (TTI) level, which is not limited in the embodiments of the present application.

In present embodiment, in order to better reduce the transmission power of the cell reference signal in a multi-level manner, the method further includes a step described below before step S202: at least one power level is configured, where each of the at least one power level is less than a power level defined by the base station. When the at least one power level includes multiple power levels, the multiple power levels are different from each other. When multiple power levels are configured, the multiple power levels include a first power level and a second power level. The first power level includes a power level used for transmission on a resource block other than the N central resource blocks or a designated symbol when not all terminals are in a sleep state. The second power level includes a power level used for transmission on a resource block other than the N central resource blocks when all terminals are in the sleep state. Step S204 has two execution results, which will be described in detail below.

### First case

When the monitoring result includes the first monitoring result, step in which the transmission power of the cell reference signal is reduced to the specified power according to the first monitoring result and the configuration information and the cell reference signal is transmitted on the transmission resource includes steps described below.

When the configuration information indicates the time domain power control, the cell reference signal is transmitted on a symbol 0/1 according to the power defined by the base station, and the cell reference signal is transmitted on a symbol other than the symbol 0/1 of the current cell according to the first power level.

When the configuration information indicates the frequency domain power control, the cell reference signal is transmitted on the N central resource blocks and the scheduling resource block according to the power defined by the base station, and the cell reference signal is transmitted on the non-scheduling resource block according to the first power level.

When the configuration information indicates the time-frequency domain power control, the cell reference signal is transmitted on the symbol 0/1 according to the power defined by the base station, the cell reference signal is transmitted on the N central resource blocks and the scheduling resource block according to the power defined by the base station, and the cell reference signal is transmitted on the non-scheduling resource block according to the first power level.

### Second case

In an embodiment, the method further includes steps described below.

When the monitoring result includes the second monitoring result, it is determined whether all terminals in the current cell enter the sleep state to obtain a determination result.

The transmission power of the cell reference signal is reduced to the specified power according to the second monitoring result, the determination result and the configuration information, and the cell reference signal is transmitted on the transmission resource.

Step in which the transmission power of the cell reference signal is reduced to the specified power according to the second monitoring result and the determination result and the cell reference signal is transmitted on the transmission resource includes steps described below. When the determination result indicates that not all terminals enter the sleep state and the configuration information indicates the time domain power control, the cell reference signal is transmitted on the symbol 0/1 according to the power defined by the base station, and the cell reference signal is transmitted on a symbol other than the symbol 0/1 of the current cell according to the first power level.

When the determination result indicates that not all the terminals enter the sleep state and the configuration information indicates the frequency domain power control, the cell reference signal is transmitted on the N central resource blocks according to the power defined by the base station, and the cell reference signal is transmitted on a resource block other than the N central resource blocks according to the first power level.

When the determination result indicates that not all the terminals enter the sleep state and the configuration information indicates the time-frequency domain power control, the cell reference signal is transmitted on the symbol 0/1 according to the power defined by the base station, the cell reference signal is transmitted according to the power defined by the base station on the N central resource blocks, and the cell reference signal is transmitted on a resource block other than the N central resource blocks according to the first power level.

When the determination result indicates that all the terminals enter the sleep state, the cell reference signal is transmitted on the N central resource blocks according to the power defined by the base station, and the cell reference signal is transmitted on a resource block other than the N central resource blocks according to the second power level.

In the present embodiment, N is equal to 6.

The scheduling resource block in the present embodiment includes a resource block involved in system message block scheduling, paging scheduling, UE scheduling and the like.

When the configuration information of the background of the base station indicates the time domain power control, impact granularity is a symbol; when the configuration information of the background of the base station indicates the frequency domain power control, the impact granularity is a resource block (RB); when the configuration information of the background indicates the time-frequency domain power control, the impact granularity is a symbol and a RB. Generally, the configuration information of the background of the base station indicates "time-frequency domain power control".

The first power level and the second power level are described below, which are also referred to as power of "a reduced power level when not all terminals in the sleep state" and power of "a reduced power level when all terminals are in the sleep state", respectively.

The "reduced power level when not all terminals in the sleep state" means a power level of power of transmission on a RB other than the N central RBs or some symbols when not all UE are in the sleep state and there is no system message block scheduling or paging scheduling. The "reduced power level when all terminals are in the sleep state" means the power level of power of transmission on a RB other than the N central RBs when all UEs are in the sleep state and there is no system message block scheduling or paging scheduling.

Where, both of the "reduced power level when not all terminals in the sleep state" and the "reduced power level when all terminals are in the sleep state" are lower than a normal power level (which may be understood as a normal transmission power level in the related technologies), and both of them belong to a reduced power level and are different from each other. Generally, a power reduction value is a power offset value with respect to the power of the N central RBs. In an embodiment, the minimum value of N is 6.

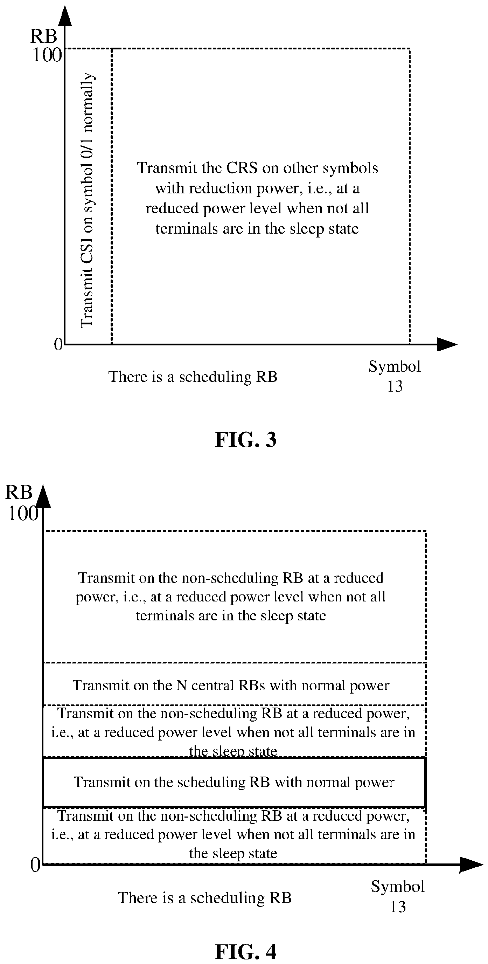

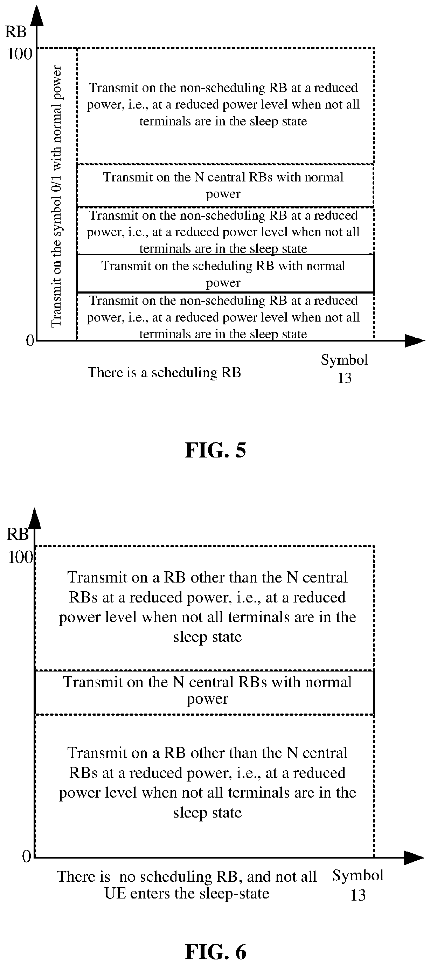

The above power processing process will be described below with reference to some examples. After resource block (RB) level granularity monitoring on a TTI level (similar to operations in the above step S202) is performed, related decision strategies are as follows:
When there is a scheduling RB for this TTI (i.e. a current transmission time interval):
in response to determining that the background configuration of the base station indicates the time domain power control, as shown in FIG. 3, transmission on the symbol 0/1 is transmitted at a normal power, and transmission on a symbol other than the symbol 0/1 is transmitted a reduced power (i.e. the "reduced power level when not all terminals in the sleep state" is used);
in response to determining that the background configuration of the base station indicates the frequency domain power control, as shown in FIG. 4, normal transmission power is guaranteed on the N central RBs and the scheduling RB, and transmission on the non-scheduling RB is transmitted at a reduced power (i.e. the "reduced power level when not all terminals in the sleep state" is used);
in response to determining that the background configuration of the base station indicates the time-frequency domain power control, as shown in FIG. 5, the transmission on the symbol 0/1 is transmitted at a normal power, for a symbol other than the symbol 0/1: the normal transmission power is guaranteed on the N central RBs and scheduling RB, and the transmission on the non-scheduling RBs is transmitted at a reduced power (i.e. the "reduced power level when not all terminals in the sleep state" is used).

When there is no scheduling RB in this TTI and not all UE enters the sleep state, as shown in FIG. 3, in response to determining that the background configuration of the base station indicates the time domain power control, the transmission on the symbol 0/1 is transmitted at a normal power and the transmission on a symbol other than the symbol 0/1 is transmitted at a reduced power (i.e. the "reduced power level when not all terminals in the sleep state" is used). As shown in FIG. 6, in response to determining that the background configuration of the base station indicates the frequency domain power control, the normal transmission power is guaranteed on the N central RBs, and the transmission on a RB other than the N central RBs is transmitted at a reduced power (i.e. the "reduced power level when not all terminals in the sleep state" is used).

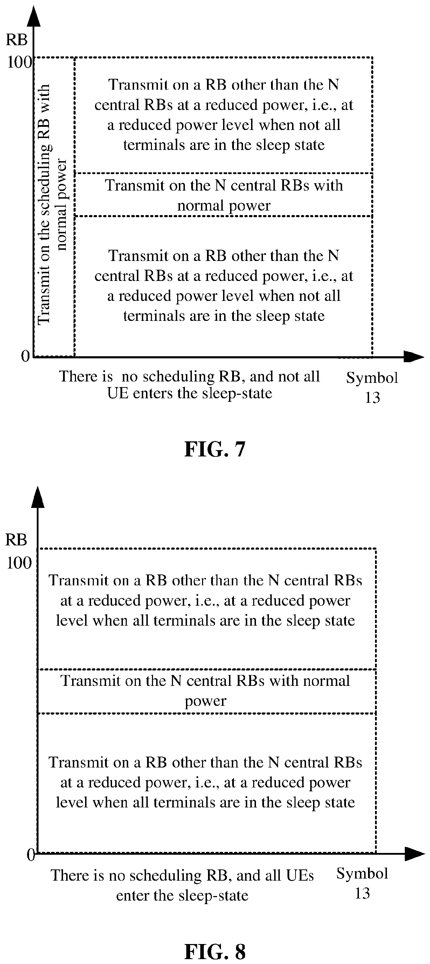

As shown in FIG. 7, in response to determining that the background configuration of the base station indicates the time-frequency domain power control, the transmission on the symbol 0/1 is transmitted at a normal power, and for a symbol other than the symbol 0/1: the normal transmission power is guaranteed on the N central RBs and the transmission on a RB other than the N central RBs is transmitted at a reduced power (i.e. the "reduced power level when not all terminals in the sleep state" is used).

As shown in FIG. 8, when there is no scheduling RB in this TTI and all UEs enter the sleep state, the normal transmission power is guaranteed on the N central RBs, the transmission on a RB other than the N central RBs is transmitted at a reduced power (i.e. the "reduced power level when all terminals are in the sleep state" is used).

It should be noted that, the symbol 0/1 is of a certain subframe. Whether all UEs are in the sleep state is determined within the current TTI, and is determined by a scheduling module based on discontinuous receiving states of all UEs. A simple implementation manner is as follows: a sleep state of UE is indicated as 1 and the non-sleep-state is indicated as 0, a logic "AND" is performed on the discontinuous receiving states of all UEs, if the result is 1, all UEs are considered to be in the sleep state, otherwise, not all UE are considered to enter the sleep state.

Conditions of whether there is a scheduling resource block during the TTI and whether all UEs are in the sleep state may be determined at the same time or only one of the conditions may be determined, and corresponding results will be different if determination conditions are different. Taking the time-frequency domain power control as an example, assuming that only the condition that whether there is a scheduling RB during the current TTI is determined, if there is a scheduling resource block, the processing flow shown in FIG. 5 is adopted, while if there is no scheduling resource block, the processing flow shown in FIG. 7 is adopted. Assuming that it is only determined whether all UEs enter the sleep state, if all UEs enter the sleep state and the current subframe is not a SIB or a paging subframe, the processing flow shown in FIG. 8 is adopted, while if not all UE enters the sleep state, the processing flow shown in FIG. 7 is adopted.

Through the technical solutions provided by the embodiments of the present application, at least one of a TTI level power, symbol granularity or RB granularity may be monitored and adjusted, time granularity and control range granularity of the power control are fine; with respect bearingless RBs, the power may be reduced or even no power is required, thus influence on surrounding cells (a reduction threshold may be configured as appropriate) may be reduced; the present cell (i.e. the current cell) can save energy; interference of the present cell to other neighbor cells can be reduced (according to the configuration conditions); and since no interaction with the UE and other neighbor cells, resources caused by signaling interaction are greatly saved.

Through the technical solutions of the above embodiments, each cell completes its own power control with minimum granularity (at least one of a symbol or a RB). When each cell does this, overall power usage efficiency is further improved. Moreover, the power processing method provided by the embodiments of the present application and a conventional power control method may be used simultaneously or separately, which is not limited in the present application.

From the description of the above embodiments, those skilled in the art may clearly understand that the method according to the above embodiments can be implemented by means of a software plus a necessary general-purpose hardware platform, and of course may also be implemented by means of a hardware. The technical solutions of the present application may be embodied in a form of a software product, which is stored in a storage medium (such as a ROM/RAM, a magnetic disk, an optical disk) and includes a number of instructions to cause a terminal device (which may be a mobile phone, a computer, a server, or a network device, etc.) to perform the method described in the embodiments of the present application.

### Embodiment II

In this embodiment, a power processing device is further provided. The device is configured to implement the above-mentioned embodiments, which has been described will not be repeated. As used hereinafter, the term "module" may be implemented as at least one of a software or a hardware with a predetermined function. The device described in following embodiments may be implemented in a software, but implementation of a hardware or a software-hardware combination is also possible and contemplated.

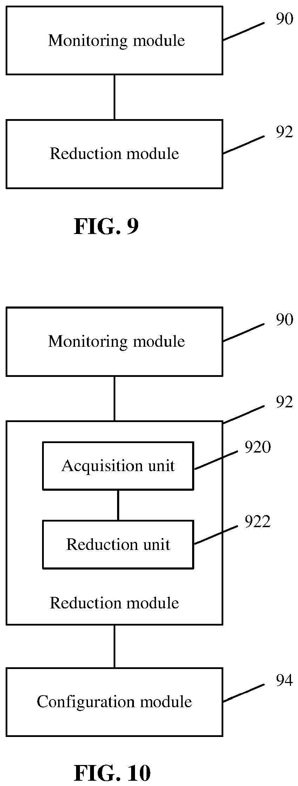

The embodiment related to a power processing device as shown in FIG. 9 is not covered by the claimed invention. FIG. 9 is a block diagram of a power processing device according to an embodiment of the present application. As shown in FIG. 9, the device includes a monitoring module 90 and a reduction module 92.

The monitoring module 90 is configured to monitor resource blocks of a current cell at a predetermined time interval to obtain a monitoring result.

The reduction module 92 is configured to reduce transmission power of a cell reference signal to a specified power according to the monitoring result, and transmit the cell reference signal on a transmission resource. The transmission resource includes at least one of a symbol and a designated resource block. The designated resource block includes at least one of a scheduling resource block, a non-scheduling resource block and N central resource blocks, where N is a positive integer.

Through functions of the above modules, the resource blocks of the current cell are monitored at the predetermined time interval, so that the transmission power for transmitting the cell reference signal on the transmission resource is flexibly adjusted (a power reduction operation). Therefore, by reducing the transmission power of the cell reference signal, the interference of the cell reference signal to other cells can be avoided, and the interference to other cells can be further reduced, thus the cell throughput is improved.

The embodiment related to a power processing device as shown in FIG. 10 is not covered by the claimed invention. FIG. 10 is a structural block diagram of another power processing device according to an embodiment of the present application. As shown in FIG. 10, the reduction module 92 includes an acquisition unit 920 and a reduction unit 922.

The acquisition unit 920 is configured to acquire configuration information of a background of a base station. The configuration information includes at least one of information indicating time domain power control, information indicating frequency domain power control and information indicating time-frequency domain power control.

The reduction unit 922 is configured to reduce the transmission power of the cell reference signal to the specified power according to the monitoring result and the configuration information, and transmit the cell reference signal on a transmission resource.

In an embodiment, the monitoring module 90 is further configured to obtain a first monitoring result if it is monitored that a resource block in the resource blocks is scheduled during the predetermined time interval; and to obtain a second monitoring result if it is monitored that no resource block in the resource blocks is scheduled during the predetermine time interval.

As shown in FIG. 10, the device further includes a configuration module 94 configured to configure at least one power level. Each of the at least one power level is less than a power level defined by the base station. When the at least one power level includes multiple power levels, the multiple power levels are different from each other, when the multiple power levels are configured, the multiple power levels include a first power level and a second power level. The first power level includes a power level used for transmission on a resource block other than the N central resource blocks or a designated symbol when not all terminals are in a sleep state. The second power level includes a power level used for transmission on a resource block other than the N central resource blocks when all terminals are in the sleep state.

In an embodiment, the reduction module 92 is further configured to perform the following operations: in response to determining that the configuration information indicates the time domain power control, transmitting the cell reference signal on the symbol 0/1 according to the power defined by the base station, and transmitting the cell reference signal on a symbol other than the symbol 0/1 of the current cell according to the first power level; in response to determining that the configuration information indicates the frequency domain power control, transmitting the cell reference signal on the N central resource blocks and the scheduling resource block according to the power defined by the base station, and transmitting the cell reference signal on the non-scheduling resource block according to the first power level; in response to determining that the configuration information indicates the time-frequency domain power control, transmitting the cell reference signal on the symbol 0/1 according to the power defined by the base station, transmitting the cell reference signal on the N central resource blocks and the scheduling resource block according to the power defined by the base station, and transmitting the cell reference signal on the non-scheduling resource block according to the first power level.

In an embodiment, the reduction module 92 is further configured to perform the following operations: in response to determining that the monitoring result includes the second monitoring result, determining whether all terminals of the current cell enter the sleep state to obtain a determination result; reducing the transmission power of the cell reference signal to the specified power according to the second monitoring result, the determination result and the configuration information, and transmitting the cell reference signal on a transmission resource. In an embodiment, the reduction module 92 is further configured to perform the following operations: in response to determining that the determination result indicates that not all terminals are in the sleep state and the configuration information indicates the time domain power control, transmitting the cell reference signal on the symbol 0/1 according to the power defined by the base station, and transmitting the cell reference signal on the symbol other than the symbol 0/1 of the current cell according to the first power level; in response to determining that the determination result indicates that not all terminals are in the sleep state and the configuration information indicates the frequency domain power control, transmitting the cell reference signal on the N central resource blocks according to the power defined by the base station, and transmitting the cell reference signal on a resource block other than the N central resource blocks according to the first power level; in response to determining that the determination result indicates not all terminals are in the sleep state and the configuration information indicates the time-frequency domain power control, transmitting the cell reference signal on the symbol 0/1 according to the power defined by the base station, transmitting the cell reference signal on the N central resource blocks according to the power defined by the base station, and transmitting the cell reference signal on a resource block other than the N central resource blocks according to the first power level; in response to determining that the determination result indicates that all terminals are in the sleep state, transmitting the cell reference signal on the N central resource blocks according to the power defined by the base station, and transmitting the cell reference signal on a resource block other than the N central resource blocks according to the second power level.

It should be noted that, the above modules may be implemented by a software or a hardware, and the latter may be implemented by following methods, but is not limited thereto, the above modules are all located in a same processor. Alternatively, the above modules may be located in different processors with any combination.

### Embodiment III

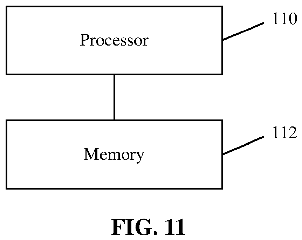

In the present embodiment, a power processing device is further provided. As shown in FIG. 11, the device includes a processor 110 and a memory 112 configured to store instructions executable by the processor 110.

The processor 110 is configured to monitor resource blocks of a current cell at a predetermined time interval to obtain a monitoring result; reduce transmission power of a cell reference signal to a specified power according to the monitoring result, and transmit the cell reference signal on a transmission resource. The transmission resource includes at least one of a symbol and a designated resource block. The designated resource block includes at least one of a scheduling resource block, a non-scheduling resource block and N central resource blocks, where N is a positive integer.

Through interaction between the processor and the memory, the resource blocks of the current cell can be monitored at the predetermined time interval, and further the transmission power of the cell reference signal on the transmission resource can be flexibly adjusted (a power reduction operation). Therefore, by reducing the transmission power of the cell reference signal, the interference of the cell reference signal on other cells can be avoided, and further the interference on other cells is reduced, and the cell throughput is improved.

The processor 110 is further configured to acquire configuration information of a background of a base station, and reduce, according to the monitoring result and the configuration information, the transmission power for transmitting the cell reference signal on the transmission resource to the specified power. The configuration information includes at least one of information indicating time domain power control, information indicating frequency domain power control and information indicating time-frequency domain power control.

It should be noted that the technical solutions of the above-mentioned embodiments one to three may be used in combination or separately, which is not limited in the present application.

The above technical solutions are described below with reference to multiple exemplary embodiments, but are not used to limit the technical solutions of the embodiments of the present application.

Exemplary embodiment one (there is UE scheduling in the cell - the time domain power control)

Exemplary embodiment one includes steps 10, 15, 20, 30, and 40.

In step 10, the background configures the "reduced power level when not all UEs is in the sleep state" and the "reduced power level when all UEs are in the sleep state" to a decision module through a configuration module. The configuration module, the decision module and the scheduling module mentioned in the embodiments of the present application may be provided in the base station.

In step 15, configuration of the background of the base station selects the time domain power control.

In step 20, a media access control (MAC) layer of the base station collects PDSCH scheduling conditions of the cell in each TTI.

In step 30, the MAC layer of the base station monitors scheduling conditions about all RBs in the cell and determines that there is UE scheduling currently.

In step 40, the MAC layer of the base station normally transmits a CRS on the symbol 0/1, and on other symbols, the CRS is transmitted at the "reduced power level when not all UEs is in the sleep state".

Exemplary embodiment two (there is UE scheduling in the cell - the frequency domain power control)

Exemplary embodiment two includes steps 10, 15, 20, 30, and 40.

In step 10, the background configures the "reduced power level when not all UEs is in the sleep state" and the "reduced power level when all UEs are in the sleep state" to the decision module through the configuration module.

In step 15, the configuration of the background of the base station selects the frequency domain power control.

In step 20, the MAC layer of the base station collects PDSCH scheduling conditions of the cell in each TTI.

In step 30, the MAC layer of the base station monitors scheduling conditions about all RBs in the cell and determines whether there is UE scheduling currently.

In step 40, the MAC layer of the base station transmits the CRS on six central RBs and all scheduling RBs at the normal power, and the CRS is transmitted on all non-scheduling RBs at power J2 at the "reduced power level when not all UEs is in the sleep state".

Exemplary embodiment three (there is UE scheduling in the cell - the time-frequency domain power control)

Exemplary embodiment three includes steps 10, 15, 20, 30, and 40.

In step 10, the background configures the "reduced power level when not all UEs is in the sleep state" and the "reduced power level when all UEs are in the sleep state" to the decision module through the configuration module.

In step 15, the configuration of the background of the base station selects the time-frequency domain power control.

In step 20, the MAC layer of the base station collects PDSCH scheduling conditions of the cell in each TTI.

In step 30, the MAC layer of the base station monitors scheduling conditions about all RBs in the cell and determines whether there is UE scheduling currently.

In step 40, the MAC layer of the base station transmits the CSI on the symbol 0/1 at the normal power, for a symbol other than the symbol 0/1: the normal transmission power is guaranteed on the N central RBs and the scheduling RB, and the "reduced power level when not all UEs is in the sleep state" is adopted for the transmission on a non-scheduling RB.

Exemplary embodiment four (there is no UE scheduling in the cell and not all UE enters the sleep state - the time domain power control)

Exemplary embodiment four includes steps 10, 15, 20, 30, and 40.

In step 10, the background configures the "reduced power level when not all UEs is in the sleep state" and the "reduced power level when all UEs are in the sleep state" to the decision module through the configuration module.

In step 15, the configuration of the background selects the time domain power control.

In step 20, the MAC layer of the base station collects PDSCH scheduling conditions of the cell in each TTI.

In step 30, the MAC layer of the base station monitors scheduling conditions about all RBs in the cell, and determines there is no UE scheduling currently and not all UE enters the sleep state.

In step 40, the MAC layer of the base station transmits the CRS on the symbol 0/1 at the normal power, and on a symbol other than the symbol 0/1, the CRS is transmitted at power J2 at the "reduced power level when not all UEs is in the sleep state".

Exemplary embodiment five (there is no UE scheduling in the cell and not all UE enters the sleep state - the frequency domain power control)

Exemplary embodiment five includes steps 10, 15, 20, 30, and 40.

In step 10, the background configures the "reduced power level when not all UEs is in the sleep state" and the "reduced power level when all UEs are in the sleep state" to the decision module through the configuration module.

In step 15, the configuration of the background selects the frequency domain power control.

In step 20, the MAC layer of the base station collects PDSCH scheduling conditions of the cell in each TTI.

In step 30, the MAC layer of the base station monitors scheduling conditions about all RBs in the cell and determines that there is no UE scheduling currently and not all UE enters the sleep state.

In step 40, the MAC layer of the base station transmits CRS on six central RBs at the normal power, and on a RB other than the six central RBs, the CRS is transmitted at power J2 at the "reduced power level when not all UEs is in the sleep state".

Exemplary embodiment six (there is no UE scheduling in the cell and not all UE enters the sleep state - the time-frequency domain power control)

Exemplary embodiment six includes steps 10, 15, 20, 30, and 40.

In step 10, the background configures the "reduced power level when not all UEs is in the sleep state" and the "reduced power level when all UEs are in the sleep state" to the decision module through the configuration module.

In step 15, the configuration of the background selects the time-frequency domain power control.

In step 20, the MAC layer of the base station collects PDSCH scheduling conditions of the cell in each TTI.

In step 30, the MAC layer of the base station monitors scheduling conditions about all RBs in the cell and determines that there is no UE scheduling currently and not all UE enters the sleep state.

In step 40, the MAC layer of the base station transmits the CRS on the symbol 0/1 at the normal power, and on symbols other than the symbol 0/1: normal transmission power is guaranteed on the central 6 RBs, while transmission on the RB other than the 6 central RBs is reduced to power J2 at the "reduced power level when not all UEs is in the sleep state".

Exemplary embodiment seven (all UEs in the cell enter the sleep state - arbitrary domain configuration)

Exemplary embodiment seven includes steps 10, 15, 20, 30, and 40.

In step 10, the background configures the "reduced power level when not all UEs is in the sleep state" and the "reduced power level when all UEs are in the sleep state" to the decision module through the configuration module.

In step 15, the configuration of the background selects the frequency domain/time domain/time-frequency domain power control.

In step 20, the MAC layer of the base station collects PDSCH scheduling conditions of the cell in each TTI.

In step 30, the MAC layer of the base station monitors scheduling conditions about all RBs in the cell and determines that there is no UE scheduling and all UEs enter the sleep state.

In step 40, the MAC layer of the base station transmits CRS on the six central RBs at the normal power, and the cell reference signal CRS is transmitted on RBs other than the six central RBs at power J2 at the "reduced power level when all UEs are in the sleep state".

Exemplary Embodiment Eight (Coexistence of coarse adjustment and fine adjustment of cell power)

Exemplary embodiment eight includes step 10 and step 20.

In step 10, the cell performs downlink open-loop power control with a relatively long modification period, and then main transmission "normal power" is determined.

In step 20, TTI monitoring on the MAC layer of the base station cooperates with the configuration module, the decision module and an execution module to adjust the power transmission range, and to fine-tune local power.

The technical solutions provided by the above embodiments and the exemplary embodiments may achieve following technical effects in a CRS-based application: unnecessary CRS transmission can be reduced as much as possible according to its own scheduling situation without interaction with UE and surrounding neighbor cells. Moreover, interference on other cells can be reduced, the SINR in the network can be improved, an available proportion of 256 quadrature amplitude modulation (QAM) is increased, and the user rate (a cell user downlink average rate) is increased. In addition, the downlink user rate can be increased by 50% and the network throughput can be increased by 10% in an embodiment;

In an embodiment, while the interference of the CRS is reduced, the influence on channel estimation, demodulation and measurement feedback of the terminal is reduced as much as possible. Since key signaling and main KPIs are not affected, green energy conservation can be realized at the same time. In addition, the above technical solutions can satisfy some special requirements and third-party testing requirements, which can optimize the network.

### Embodiment IV

The embodiments of the present application further provide a storage medium including a stored program. The program, when being executed, is used for implementing any one of the methods described above.

In an embodiment, the storage medium is configured to store program codes, which are used for implementing step S1 and step S2.

In step S1, resource blocks of a current cell are monitored at a predetermined time interval to obtain a monitoring result.

In step S2, transmission power of a cell reference signal is reduced to a specified power according to the monitoring result, and the cell reference signal is transmitted on a transmission resource. The transmission resource includes at least one of a symbol and a designated resource block. The designated resource block includes at least one of a scheduling resource block, a non-scheduling resource block and N central resource blocks, and N is a positive integer.

In an embodiment, the storage medium is further configured to store program codes, which are used for implementing step S3 and step S4.

In step S3, configuration information of the background of a base station is acquired. The configuration information includes at least one of information indicating time domain power control, information indicating frequency domain power control and information indicating time frequency domain power control.

In step S4, the transmission power of the cell reference signal is reduced to the specified power according to the monitoring result and the configuration information, and the cell reference signal is transmitted on the transmission resource.

In an embodiment, the above storage medium may include, but is not limited to, a U disk, a read-only memory (ROM), a random access memory (RAM), a removable hard disk, a magnetic disk or an optical disk, and other media capable of storing program codes.

In an embodiment, examples in this embodiment may refer to examples described in the above embodiments and alternative embodiments, which is not described here.

The above-mentioned modules or steps of the present application may be implemented by a general-purpose computing device, which may be centralized on a single computing device or distributed on a network composed of multiple computing devices, in an embodiment, they may be implemented by program codes executable by the computing device, so that they may be stored in a storage device and executed by the computing device, and in some cases, steps shown or described may be executed in a sequence different from that herein, or they may be respectively manufactured into multiple integrated circuit modules, or multiple modules and steps among them may be manufactured into a single integrated circuit module. Thus, the present application is not limited to any specific software-hardware combination.

## Claims

1. A power processing method, performed by
a base station comprising:
monitoring resource blocks of a current cell at a predetermined time interval to obtain a monitoring result (S202); and
reducing transmission power of a cell reference signal to a specified power according to the monitoring result and transmitting the cell reference signal on a transmission resource (S204);
wherein the transmission resource comprises at least one of a symbol and a designated resource block; and
wherein the designated resource block comprises at least one of a scheduling resource block, a non-scheduling resource block and N central resource blocks, wherein N is a positive integer;
**characterized in that**, the reducing transmission power of the cell reference signal to the specified power according to the monitoring result and transmitting the cell reference signal on the transmission resource (S204) comprises:
acquiring configuration information of a background of the base station, wherein the configuration information comprises at least one of information indicating time domain power control, information indicating frequency domain power control and information indicating time-frequency domain power control; and
reducing the transmission power of the cell reference signal to the specified power according to the monitoring result and the configuration information, and transmitting the cell reference signal on the transmission resource.

2. The method according to claim 1, wherein the monitoring resource blocks of the current cell at the predetermined time interval to obtain the monitoring result (S202) comprises:
obtaining a first monitoring result when it is monitored that a resource block in the resource blocks of the current cell is scheduled during the predetermined time interval; and
obtaining a second monitoring result when it is monitored that no resource block in the resource blocks of the current cell is scheduled during the predetermined time interval.

3. The method according to claim 2, wherein before reducing the transmission power of the cell reference signal to the specified power according to the monitoring result, the method further comprises:
configuring at least one power level, wherein the at least one power level is less than a power level defined by the base station, and when the at least one power level comprises multiple power levels, the multiple power levels are different from each other, wherein the multiple power levels are configured so that the multiple power levels comprise a first power level and a second power level;
wherein the first power level comprises a power level used for transmission on a resource block other than the N central resource blocks or a designated symbol when not all terminals are in a sleep state; and the second power level comprises a power level used for transmission on a resource block other than the N central resource blocks when all terminals are in the sleep state.

4. The method according to claim 3, wherein in response to determining that the monitoring result comprises the first monitoring result, the transmission power of the cell reference signal is reduced to the specified power according to the first monitoring result and the configuration information, and the cell reference signal is transmitted on the transmission resource in the following manner:
in response to determining that the configuration information indicates the time domain power control, transmitting the cell reference signal according to the power defined by the base station on a symbol 0/1, and transmitting the cell reference signal on a symbol other than the symbol 0/1 of the current cell according to the first power level;
in response to determining that the configuration information indicates the frequency domain power control, transmitting the cell reference signal on the N central resource blocks and the scheduling resource block according to the power defined by the base station, and transmitting the cell reference signal on the non-scheduling resource block according to the first power level; and
in response to determining that the configuration information indicates the time-frequency domain power control, transmitting the cell reference signal on the symbol 0/1 according to the power defined by the base station, transmitting the cell reference signal on the N central resource blocks and the scheduling resource block according to the power defined by the base station, and transmitting the cell reference signal on the non-scheduling resource block according to the first power level,.

5. The method according to claim 3, further comprising:
in response to determining that the monitoring result comprises the second monitoring result, determining whether all terminals in the current cell enter a sleep state to obtain a determination result;
wherein the transmission power of the cell reference signal is reduced to the specified power according to the second monitoring result, the determination result and the configuration information, and the cell reference signal is transmitted on the transmission resource.

6. The method according to claim 5, wherein the transmission power of the cell reference signal is reduced to the specified power according to the second monitoring result, the determination result and the configuration information and the cell reference signal is transmitted on the transmission resource in the following manner:
in response to determining that the determination result indicates that not all terminals are in the sleep state and the configuration information indicates the time domain power control, transmitting the cell reference signal on the symbol 0/1 according to the power defined by the base station, and transmitting the cell reference signal on a symbol other than the symbol 0/1 of the current cell according to the first power level;
in response to determining that the determination result indicates that not all terminals are in the sleep state and the configuration information indicates the frequency domain power control, transmitting the cell reference signal on the N central resource blocks according to the power defined by the base station, and transmitting the cell reference signal on a resource block other than the N central resource blocks according to the first power level;
in response to determining that the determination result indicates that not all terminals are in the sleep state and the configuration information indicates the time-frequency domain power control, transmitting the cell reference signal on the symbol 0/1 according to the power defined by the base station, transmitting the cell reference signal on the N central resource blocks according to the power defined by the base station, and transmitting the cell reference signal on a resource block other than the N central resource blocks according to the first power level; and
in response to determining that the determination result indicates that all terminals are in the sleep state, transmitting the cell reference signal on the N central resource blocks according to the power defined by the base station, and transmitting the cell reference signal on a resource block other than the N central resource blocks according to the second power level.

7. A power processing device of a base station comprising:
a processor (110); and
a memory (112) configured to store instructions executable by the processor (110);
wherein the processor (110) is configured to monitor resource blocks of a current cell at a predetermined time interval to obtain a monitoring result; reduce transmission power of a cell reference signal to a specified power according to the monitoring result, and transmit the cell reference signal on a transmission resource;
wherein the transmission resource comprises at least one of a symbol and a designated resource block; and the designated resource block comprises at least one of a scheduling resource block, a non-scheduling resource block and N central resource blocks, wherein N is a positive integer;
**characterized in that**, the processor (110) is further configured to acquire configuration information of a background of the base station, reduce the transmission power of the cell reference signal to the specified power according to the monitoring result and the configuration information, and transmit the cell reference signal on the transmission resource, wherein the configuration information comprises at least one of information indicating time domain power control, information indicating frequency domain power control and information indicating time-frequency domain power control.

8. A computer-readable storage medium, storing program instructions, wherein the program instructions, when executed by a processor, implement steps of the method according to any one of claims 1 to 6.

## Patentansprüche

1. Leistungsverarbeitungsverfahren, das von einer Basisstation durchgeführt wird, umfassend:
Überwachen von Ressourcenblöcken einer aktuellen Zelle in einem vorgegebenen Zeitintervall, um ein Überwachungsergebnis zu erhalten (S202); und
Reduzieren der Übertragungsleistung eines Zellreferenzsignals entsprechend dem Überwachungsergebnis auf eine spezifizierte Leistung und Übertragen des Zellreferenzsignals auf einer Übertragungsressource (S204); wobei die Übertragungsressource mindestens eines von einem Symbol und einem bestimmten Ressourcenblock umfasst; und
wobei der bestimmte Ressourcenblock mindestens eines von einem Planungsressourcenblock, einem Nichtplanungsressourcenblock und N zentralen Ressourcenblöcken umfasst, wobei N eine positive ganze Zahl ist; **dadurch gekennzeichnet, dass** das Reduzieren der Übertragungsleistung des Zellreferenzsignals entsprechend dem Überwachungsergebnis auf die spezifizierte Leistung und das Übertragen des Zellreferenzsignals auf der Übertragungsressource (S204) Folgendes umfasst:
Erfassen von Konfigurationsinformationen eines Hintergrunds der Basisstation, wobei die Konfigurationsinformationen mindestens Informationen umfassen, die eine Leistungssteuerung im Zeitbereich angeben, Informationen, die eine Leistungssteuerung im Frequenzbereich angeben, und Informationen, die eine Leistungssteuerung im Zeit-Frequenz-Bereich angeben; und
Reduzieren der Übertragungsleistung des Zellreferenzsignals entsprechend dem Überwachungsergebnis und den Konfigurationsinformationen auf die spezifizierte Leistung und
Übertragen des Zellreferenzsignals auf der Übertragungsressource.

2. Verfahren nach Anspruch 1, wobei das Überwachen von Ressourcenblöcken der aktuellen Zelle in dem vorbestimmten Zeitintervall zum Erhalten des Überwachungsergebnisses (S202) Folgendes umfasst:
Erhalten eines ersten Überwachungsergebnisses, wenn überwacht wird, dass ein Ressourcenblock in den Ressourcenblöcken der aktuellen Zelle während des vorbestimmten Zeitintervalls geplant ist; und
Erhalten eines zweiten Überwachungsergebnisses, wenn überwacht wird, dass kein Ressourcenblock in den Ressourcenblöcken der aktuellen Zelle während des vorbestimmten Zeitintervalls geplant ist.

3. Verfahren nach Anspruch 2, wobei das Verfahren vor dem Reduzieren der Übertragungsleistung des Zellreferenzsignals entsprechend dem Überwachungsergebnis auf die spezifizierte Leistung ferner Folgendes umfasst:
Konfigurieren mindestens einer Leistungsstufe, wobei die mindestens eine Leistungsstufe geringer als eine von der Basisstation definierte Leistungsstufe ist, und wenn die mindestens eine Leistungsstufe mehrere Leistungsstufen umfasst, sich die mehreren Leistungsstufen voneinander unterscheiden, wobei die mehreren Leistungsstufen so konfiguriert sind, dass die mehreren Leistungsstufen eine erste Leistungsstufe und eine zweite Leistungsstufe umfassen;
wobei die erste Leistungsstufe eine Leistungsstufe umfasst, der für die Übertragung auf einem anderen Ressourcenblock als den N zentralen Ressourcenblöcken oder einem bestimmten Symbol verwendet wird, wenn sich nicht alle Endgeräte in einem Ruhezustand befinden; und die zweite Leistungsstufe eine Leistungsstufe umfasst, die für die Übertragung auf einem anderen Ressourcenblock als den N zentralen Ressourcenblöcken verwendet wird, wenn sich alle Endgeräte im Ruhezustand befinden.

4. Verfahren nach Anspruch 3, wobei als Reaktion auf Feststellen, dass das Überwachungsergebnis das erste Überwachungsergebnis umfasst, die Übertragungsleistung des Zellreferenzsignals entsprechend dem ersten Überwachungsergebnis und den Konfigurationsinformationen auf die spezifizierte Leistung reduziert wird, und das Zellreferenzsignal auf der Übertragungsressource auf folgende Weise übertragen wird:
als Reaktion auf Feststellen, dass die Konfigurationsinformationen die Leistungssteuerung im Zeitbereich angeben, Übertragen des Zellreferenzsignals auf einem Symbol 0/1 entsprechend der von der Basisstation definierten Leistung und Übertragen des Zellreferenzsignals auf einem anderen Symbol als dem Symbol 0/1 der aktuellen Zelle entsprechend der ersten Leistungsstufe;
als Reaktion auf Feststellen, dass die Konfigurationsinformationen die Leistungssteuerung im Frequenzbereich angeben, Übertragen des Zellreferenzsignals auf den N zentralen Ressourcenblöcken und dem Planungsressourcenblock entsprechend der von der Basisstation definierten Leistung und Übertragen des Zellreferenzsignals auf dem Nichtplanungsressourcenblock entsprechend der ersten Leistungsstufe; und
als Reaktion auf Feststellen, dass die Konfigurationsinformationen die Leistungssteuerung im Zeit-Frequenz-Bereich angeben, Übertragen des Zellreferenzsignals auf dem Symbol 0/1 entsprechend der von der Basisstation definierten Leistung, Übertragen des Zellreferenzsignals auf den N zentralen Ressourcenblöcken und dem Planungsressourcenblock entsprechend der von der Basisstation definierten Leistung und
Übertragen des Zellreferenzsignals auf dem Nichtplanungsressourcenblock entsprechend der ersten Leistungsstufe

5. Verfahren nach Anspruch 3, ferner umfassend:
als Reaktion auf Feststellen, dass das Überwachungsergebnis das zweite Überwachungsergebnis umfasst, Feststellen, ob alle Endgeräte in der aktuellen Zelle in einen Ruhezustand übergehen, um ein Feststellungsergebnis zu erhalten;
wobei die Übertragungsleistung des Zellreferenzsignals entsprechend dem zweiten Überwachungsergebnis, dem Feststellungsergebnis und den Konfigurationsinformationen auf die spezifizierte Leistung reduziert wird und das Zellreferenzsignal auf der Übertragungsressource übertragen wird.

6. Verfahren nach Anspruch 5, wobei die Übertragungsleistung des Zellreferenzsignals entsprechend dem zweiten Überwachungsergebnis, dem Feststellungsergebnis und den Konfigurationsinformationen auf die spezifizierte Leistung reduziert wird und das Zellreferenzsignals auf der Übertragungsressource auf folgende Weise übertragen wird:
als Reaktion auf Feststellen, dass das Feststellungsergebnis angibt, dass sich nicht alle Endgeräte im Ruhezustand befinden und die Konfigurationsinformationen die Leistungssteuerung im Zeitbereich angeben, Übertragen des Zellreferenzsignals auf dem Symbol 0/1 entsprechend der von der Basisstation definierten Leistung, und Übertragen des Zellreferenzsignals auf einem anderen Symbol als dem Symbol 0/1 der aktuellen Zelle entsprechend der ersten Leistungsstufe;
als Reaktion auf Feststellen, dass das Feststellungsergebnis angibt, dass sich nicht alle Endgeräte im Ruhezustand befinden und die Konfigurationsinformationen die Leistungssteuerung im Frequenzbereich angeben, Übertragen des Zellreferenzsignals auf den N zentralen Ressourcenblöcken entsprechend der von der Basisstation definierten Leistung, und Übertragen des Zellreferenzsignals auf einem anderen Ressourcenblock als den N zentralen Ressourcenblöcken entsprechend der ersten Leistungsstufe;
als Reaktion auf Feststellen, dass das Feststellungsergebnis angibt, dass sich nicht alle Endgeräte im Ruhezustand befinden und die Konfigurationsinformationen die Leistungssteuerung im Zeit-Frequenz-Bereich angeben, Übertragen des Zellreferenzsignals auf dem Symbol 0/1 entsprechend der von der Basisstation definierten Leistung, Übertragen des Zellreferenzsignals auf den N zentralen Ressourcenblöcken entsprechend der von der Basisstation definierten Leistung und Übertragen des Zellreferenzsignals auf einem anderen Ressourcenblock als den N zentralen Ressourcenblöcken entsprechend der ersten Leistungsstufe; und als Reaktion auf ein Feststellen, dass das Feststellungsergebnis angibt, dass sich alle Endgeräte im Ruhezustand befinden, Übertragen des Zellreferenzsignals auf den N zentralen Ressourcenblöcken entsprechend der von der Basisstation definierten Leistung und Übertragen des Zellreferenzsignals auf einem anderen Ressourcenblock als den N zentralen Ressourcenblöcken entsprechend der zweiten Leistungsstufe.

7. Leistungsverarbeitungsvorrichtung einer Basisstation, umfassend:
einen Prozessor (110); und
einen Speicher (112), der dazu konfiguriert ist, Anweisungen zu speichern, die durch den Prozessor (110) ausführbar sind;
wobei der Prozessor (110) dazu konfiguriert ist, Ressourcenblöcke einer aktuellen Zelle in einem vorgegebenen Zeitintervall zu überwachen, um ein Überwachungsergebnis zu erhalten; Übertragungsleistung eines Zellreferenzsignals entsprechend dem Überwachungsergebnis auf eine spezifizierte Leistung zu reduzieren und das Zellreferenzsignal auf einer Übertragungsressource zu übertragen;
wobei die Übertragungsressource mindestens ein Symbol und einen bestimmten Ressourcenblock umfasst; und der bestimmte Ressourcenblock mindestens einen von einem Planungsressourcenblock, einem Nichtplanungsressourcenblock und N zentralen Ressourcenblöcken umfasst, wobei N eine positive ganze Zahl ist;
**dadurch gekennzeichnet, dass** der Prozessor (110) ferner dazu konfiguriert ist, Konfigurationsinformationen eines Hintergrunds der Basisstation zu erfassen, die Übertragungsleistung des Zellreferenzsignals entsprechend dem Überwachungsergebnis und den Konfigurationsinformationen auf die spezifizierte Leistung zu reduzieren und das Zellreferenzsignal auf der Übertragungsressource zu übertragen, wobei die Konfigurationsinformationen mindestens Informationen, die eine Leistungssteuerung im Zeitbereich angeben, Informationen, die eine Leistungssteuerung im Frequenzbereich angeben, und Informationen, die eine Leistungssteuerung im Zeit-Frequenz-Bereich angeben, umfassen.

8. Computerlesbares Speichermedium, das Programmanweisungen speichert, wobei die Programmanweisungen, wenn sie von einem Prozessor ausgeführt werden, Schritte des Verfahrens nach einem der Ansprüche 1 bis 6 implementieren.

## Revendications

1. Procédé de traitement de puissance, effectué par une station de base comprenant :
la surveillance de blocs de ressources d'une cellule actuelle à un intervalle de temps prédéterminé pour obtenir un résultat de surveillance (S202) ; et
la réduction de la puissance de transmission d'un signal de référence de cellule à une puissance spécifiée selon le résultat de surveillance et la transmission du signal de référence de cellule sur une ressource de transmission (S204) ;
dans lequel la ressource de transmission comprend au moins l'un parmi un symbole et un bloc de ressource désigné ; et
dans lequel le bloc de ressources désigné comprend au moins l'un parmi un bloc de ressources de planification, un bloc de ressources de non-planification et N blocs de ressources centrales, où N est un entier positif ;
**caractérisé en ce que** la réduction de la puissance de transmission du signal de référence de cellule à la puissance spécifiée selon le résultat de surveillance et la transmission du signal de référence de cellule sur la ressource de transmission (S204) comprend :
l'acquisition d'informations de configuration d'un arrière-plan de la station de base, dans lequel les informations de configuration comprennent au moins l'une parmi des informations indiquant la commande de puissance dans le domaine temporel, des informations indiquant la commande de puissance dans le domaine fréquentiel et des informations indiquant la commande de puissance dans le domaine temps-fréquence ; et
la réduction de la puissance de transmission du signal de référence de cellule à la puissance spécifiée selon le résultat de surveillance et les informations de configuration, et la transmission du signal de référence de cellule sur la ressource de transmission.

2. Procédé selon la revendication 1, dans lequel la surveillance de blocs de ressources de la cellule actuelle à l'intervalle de temps prédéterminé pour obtenir le résultat de surveillance (S202) comprend :
l'obtention d'un premier résultat de surveillance lorsqu'il est surveillé qu'un bloc de ressources dans les blocs de ressources de la cellule actuelle est programmé pendant l'intervalle de temps prédéterminé ; et
l'obtention d'un second résultat de surveillance lorsqu'il est surveillé qu'aucun bloc de ressources dans les blocs de ressources de la cellule actuelle n'est programmé pendant l'intervalle de temps prédéterminé.

3. Procédé selon la revendication 2, dans lequel avant la réduction de la puissance de transmission du signal de référence de cellule à la puissance spécifiée selon le résultat de surveillance, le procédé comprend en outre :
la configuration d'au moins un niveau de puissance, dans lequel l'au moins un niveau de puissance est inférieur à un niveau de puissance défini par la station de base, et lorsque l'au moins un niveau de puissance comprend plusieurs niveaux de puissance,
les multiples niveaux de puissance sont différents les uns des autres, dans lequel les multiples niveaux de puissance sont configurés de sorte que les multiples niveaux de puissance comprennent un premier niveau de puissance et un second niveau de puissance ;
dans lequel le premier niveau de puissance comprend un niveau de puissance utilisé pour la transmission sur un bloc de ressources autre que les N blocs de ressources centrales ou un symbole désigné lorsque tous les terminaux ne sont pas dans un état de veille ; et le second niveau de puissance comprend un niveau de puissance utilisé pour la transmission sur un bloc de ressources autre que les N blocs de ressources centrales lorsque tous les terminaux sont dans l'état de veille.

4. Procédé selon la revendication 3, dans lequel en réponse à la détermination que le résultat de surveillance comprend le premier résultat de surveillance, la puissance de transmission du signal de référence de cellule est réduite à la puissance spécifiée selon le premier résultat de surveillance et les informations de configuration, et le signal de référence de cellule est transmis sur la ressource de transmission de la manière suivante :
en réponse à la détermination que les informations de configuration indiquent la commande de puissance dans le domaine temporel, la transmission du signal de référence de cellule selon la puissance définie par la station de base sur un symbole 0/1, et la transmission du signal de référence de cellule sur un symbole autre que le symbole 0/1 de la cellule actuelle selon le premier niveau de puissance ;
en réponse à la détermination que les informations de configuration indiquent la commande de puissance dans le domaine fréquentiel, la transmission du signal de référence de cellule sur les N blocs de ressources centrales et le bloc de ressources de planification selon la puissance définie par la station de base, et la transmission du signal de référence de cellule sur le bloc de ressources de non-planification selon le premier niveau de puissance ; et
en réponse à la détermination que les informations de configuration indiquent la commande de puissance dans le domaine temps-fréquence, la transmission du signal de référence de cellule sur le symbole 0/1 selon la puissance définie par la station de base, la transmission du signal de référence de cellule sur les N blocs de ressources centrales et le bloc de ressources de planification selon la puissance définie par la station de base, et la transmission du signal de référence de cellule sur le bloc de ressources de non-planification selon le premier niveau de puissance.

5. Procédé selon la revendication 3, comprenant en outre :
en réponse à la détermination que le résultat de surveillance comprend le second résultat de surveillance, le fait de déterminer si tous les terminaux dans la cellule actuelle entrent dans un état de veille pour obtenir un résultat de détermination ;
dans lequel la puissance de transmission du signal de référence de cellule est réduite à la puissance spécifiée selon le second résultat de surveillance, le résultat de détermination et les informations de configuration, et le signal de référence de cellule est transmis sur la ressource de transmission.

6. Procédé selon la revendication 5, dans lequel la puissance de transmission du signal de référence de cellule est réduite à la puissance spécifiée selon le second résultat de surveillance, le résultat de détermination et les informations de configuration et le signal de référence de cellule est transmis sur la ressource de transmission de la manière suivante :
en réponse à la détermination que le résultat de détermination indique que tous les terminaux ne sont pas dans un état de veille et que les informations de configuration indiquent la commande de puissance dans le domaine temporel, la transmission du signal de référence de cellule sur le symbole 0/1 selon la puissance définie par la station de base, et la transmission du signal de référence de cellule sur un symbole autre que le symbole 0/1 de la cellule actuelle selon le premier niveau de puissance ;
en réponse à la détermination que le résultat de la détermination indique que tous les terminaux ne sont pas dans l'état de veille et que les informations de configuration indiquent la commande de puissance dans le domaine fréquentiel, la transmission du signal de référence de cellule sur les N blocs de ressources centrales selon la puissance définie par la station de base, et la transmission du signal de référence de cellule sur un bloc de ressources autre que les N blocs de ressources centrales selon le premier niveau de puissance ;
en réponse à la détermination que le résultat de détermination indique que tous les terminaux ne sont pas dans l'état de veille et que les informations de configuration indiquent la commande de puissance dans le domaine temps-fréquence, la transmission du signal de référence de cellule sur le symbole 0/1 selon la puissance définie par la station de base, la transmission du signal de référence de cellule sur les N blocs de ressources centrales selon la puissance définie par la station de base, et la transmission du signal de référence de cellule sur un bloc de ressources autre que les N blocs de ressources centrales selon le premier niveau de puissance ; et en réponse à la détermination que le résultat de détermination indique que tous les terminaux sont dans l'état de veille, la transmission du signal de référence de cellule sur les N blocs de ressources centrales selon la puissance définie par la station de base, et la transmission du signal de référence de cellule sur un bloc de ressources autre que les N blocs de ressources centrales selon le second niveau de puissance.

7. Dispositif de traitement de puissance d'une station de base comprenant :
un processeur (110) ; et
une mémoire (112) configurée pour stocker des instructions exécutables par le premier processeur (110) ;
dans lequel le processeur (110) est configuré pour surveiller des blocs de ressources d'une cellule actuelle à un intervalle de temps prédéterminé pour obtenir un résultat de surveillance ;
réduire la puissance de transmission d'un signal de référence de cellule à une puissance spécifiée selon le résultat de surveillance, et transmettre le signal de référence de cellule sur une ressource de transmission ;
dans lequel la ressource de transmission comprend au moins l'un parmi un symbole et un bloc de ressource désigné ; et le bloc de ressources désigné comprend au moins l'un parmi un bloc de ressources de planification, un bloc de ressources de non-planification et N blocs de ressources centrales, où N est un entier positif ;
**caractérisé en ce que** le processeur (110) est en outre configuré pour acquérir des informations de configuration d'un arrière-plan de la station de base, réduire la puissance de transmission du signal de référence de cellule à la puissance spécifiée selon le résultat de surveillance et les informations de configuration, et transmettre le signal de référence de cellule sur la ressource de transmission, dans lequel les informations de configuration comprennent au moins l'une parmi des informations indiquant la commande de puissance dans le domaine temporel, des informations indiquant la commande de puissance dans le domaine fréquentiel et des informations indiquant la commande de puissance dans le domaine temps-fréquence.

8. Support de stockage lisible par ordinateur, stockant des instructions de programme, dans lequel les instructions de programme, lorsqu'elles sont exécutées par un processeur, mettent en œuvre les étapes du procédé selon l'une quelconque des revendications 1 à 6.
